Europäisches Patentamt

European Patent Office

Office européen des brevets

(11) Publication number: **0 348 045**

**A2**

# (12) EUROPEAN PATENT APPLICATION

(21) Application number: **89305325.6**

(22) Date of filing: **25.05.89**

(51) Int. Cl.4: **G06F 1/04**

The title of the invention has been amended (Guidelines for Examination in the EPO, A-III, 7.3).

(30) Priority: **27.05.88 JP 130533/88**
**19.09.88 JP 234003/88**
**27.09.88 JP 241604/88**

(43) Date of publication of application:
**27.12.89 Bulletin 89/52**

(84) Designated Contracting States:
**DE FR GB**

(71) Applicant: **SEIKO EPSON CORPORATION**
**4-1, Nishishinjuku 2-chome**
**Shinjuku-ku Tokyo-to(JP)**

(72) Inventor: **Takeda, Koji**
**c/o Seiko Epson Corporation 3-5 Owa**
**3-chome**
**Suwa-shi Nagano-ken(JP)**

(74) Representative: **Caro, William Egerton et al**
**J. MILLER & CO. Lincoln House 296-302 High**
**Holborn**
**London WC1V 7JH(GB)**

(54) **Method of controlling the operating speed of an information processing unit, and related information processing unit.**

(57) An information processing unit has a central processing unit (1) and means (3, 4, 5; 3, 4, 5A; 3, 10; 40) for generating clock pulses (CLK) for supply to a clock input terminal of the central processing unit for controlling the timing of the central processing unit. The frequency of the clock pulses is arranged to be altered for selectively varying this timing, for example in dependence upon the current operation of a bus cycle of the central processing unit, addresses to be accessed by the central processing unit, ambient temperature or line voltage.

FIG. 1

EP 0 348 045 A2

# AN INFORMATION PROCESSING UNIT AND A METHOD OF CONTROLLING THE OPERATING SPEED THEREOF

This invention concerns an information processing unit for use for example in a personal computer and a method of controlling the operating speed of an information processing unit, especially of controlling the bus cycle time of a central processing unit (hereinafter called a "CPU") of the information processing unit.

Significant advances have been made in techniques for increasing the speed of a CPU, including the use of a dynamic random access memory (hereinafter called a "DRAM") and erasable programmable read only memory (hereinafter called an "EPROM"). Personal computer manufacturers are putting new products with improved processing speeds on the market every year. Processing speed may be improved by increasing the frequency of clock pulses for controlling the timing of the CPU and by using high speed memories (including a DRAM or an EPROM). However, the operating speeds of input/output units (hereinafter called "I/O" units) have remained comparatively constant while those of CPUs and memories have been advancing. There is no problem with a high speed memory, if the frequency of the clock pulses for the CPU is increased, but some measures have to be taken in the case of an I/O unit which cannot match the pace of the CPU.

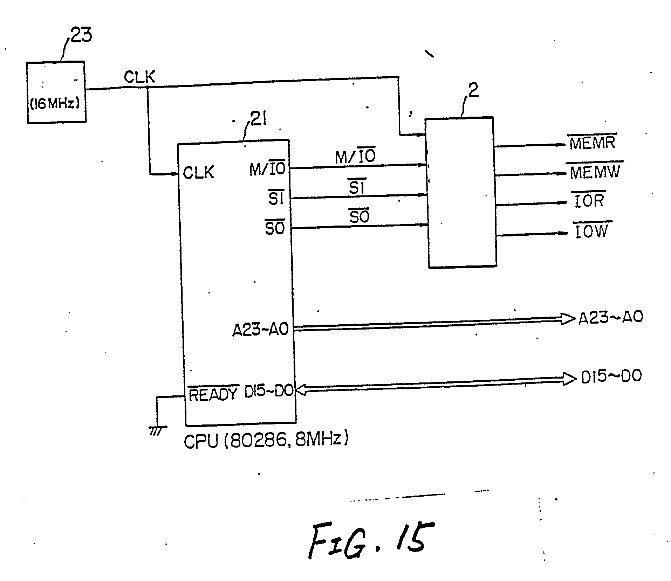

To combat this problem, a wait step has been provided in the CPU by means of a signal applied to a ready terminal of the CPU. When data in the CPU is accessed to the I/O unit, a ready signal is held inactive to create the wait step in the CPU and thereby co-ordinate the high speed CPU and the low speed I/O unit. Such a conventional technique is explained below with reference to Figures 15 to 19, which represent the operation of two known information processing units.

Figure 15 is a block diagram of a conventional information processing unit, in which portions not directly relevant to an understanding of the present invention are simplified or omitted. Therefore, such a unit may seem somewhat strange compared with an actual information processing unit, but this is simply for ease of understanding of the background to the invention.

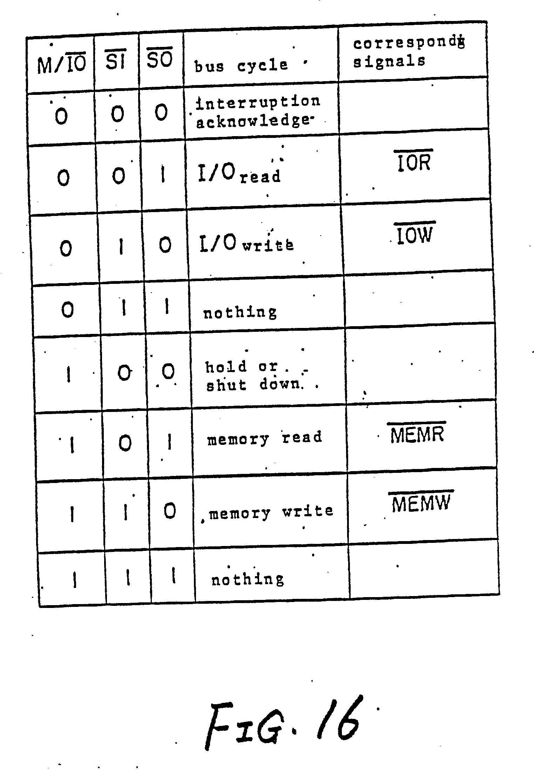

The information processing unit shown in Figure 15 includes a CPU 21 of the 80286 type having an operating frequency of 8 MHz manufactured by INTEL Co. The CPU 21 has a clock input terminal CLK for the input of clock pulses CLK having a frequency which is twice the operating frequency of the CPU. The clock pulses are generated by an oscillator 23 and have a frequency of 16 MHz. The CPU 21 also has terminals M/ $\overline{IO}$ , $\overline{ST}$ , $\overline{SO}$ for the

output of signal M/ $\overline{IO}$ , $\overline{ST}$ and $\overline{SO}$ as shown in Figure 16 indicating the current condition of the bus cycle in the CPU 21. A ready terminal $\overline{READY}$ of the CPU 21 is fixed at a low level (hereinafter called "L"). However, the bus cycle could be extended by supplying an input signal ( $\overline{READY}$ signal) to the terminal, when such a signal goes to the high level (hereinafter called "H") and be terminated when the signal goes to the level "L". Further terminals A23 to A0 are connected to address buses for the transfer of address signals A23 to A0, and terminals D15 to D0 are connected to data buses for the transfer of data signals D15 to D0. A command de-code circuit 2 issues corresponding pulse signals $\overline{MEMR}$ , $\overline{MEMW}$ , $\overline{IOR}$ , $\overline{IOW}$ in response to the signals M/ $\overline{IO}$ , $\overline{ST}$ and $\overline{SO}$ to show the bus cycle condition. The relationship between these signals and the bus cycle is shown in Figure 16.

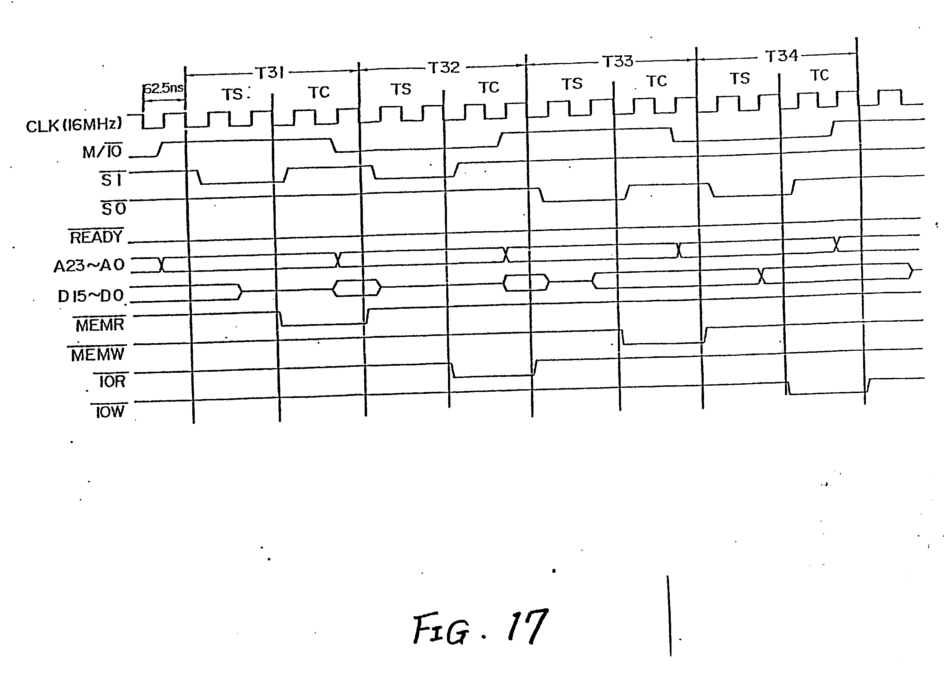

Figure 17 is a timing chart showing the timing of the signals generated in the information processing unit of Figure 15. It can be seen from this Figure that the CPU 21 runs a sequence of four bus operations as follows: T31 is a memory read bus operation, T32 is an I/O read bus operation, T33 is a memory write bus operation, and T34 is an I/O write bus operation. Each bus operation consists of two clock cycles, TS and TC, and each such cycle constitutes two clock pulses CLK. Since the clock frequency is 16 MHz, the cycle time of each of TS and TC is 125ns and the bus operation time of each of T31, T32, T33 and T34 is 250ns. During the clock cycle TS of each bus operation, the signals M/ $\overline{IO}$ , $\overline{ST}$ and $\overline{SO}$ are issued from the CPU 21 in order to distinguish the respective bus operations. These signals are de-coded in the command de-code circuit 2 and then corresponding command signals are generated during the clock cycle TC of each bus operation as follows: the signal $\overline{MEMR}$ is generated during the bus operation T31, the signal $\overline{IOR}$ is generated during the bus operation T32, the signal $\overline{MEMW}$ is generated during the bus operation T33, and the signal $\overline{IOW}$ is generated during the bus operation T34. The pulse length for each of the signals $\overline{MEMR}$ , $\overline{IOR}$ , $\overline{MEMW}$ and $\overline{IOW}$ is 125ns.

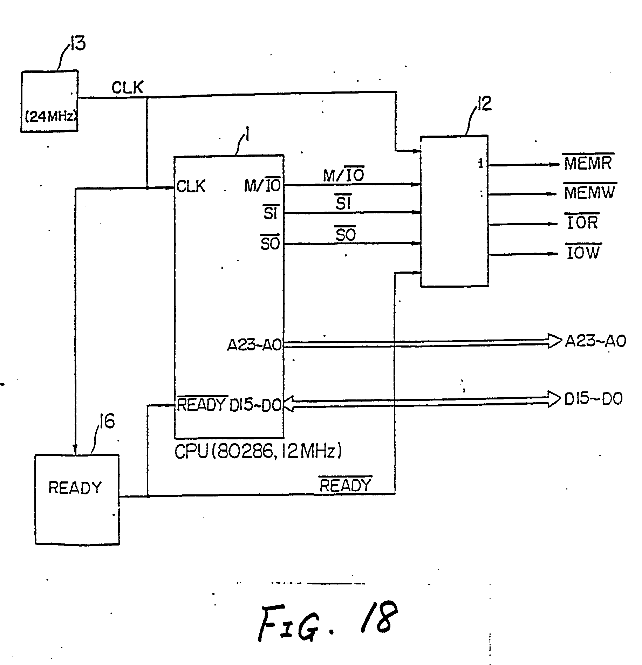

Turning now to Figure 18, an information processing unit with an increased processing speed is illustrated. This Figure shows a CPU 1 of the 80286 type having an operating frequency of 12 MHz. An oscillator 13 generates clock pulses having a frequency of 24 MHz, which is increased compared with the design shown in Figure 15. Now, if the clock frequency of the CPU is increased from 16 MHz in Figure 15 to 24 MHz in Figure 18 but the other circuit configuration remains just the same, the duration of each bus operation changes from 250ns to 167ns or is reduced by some 33%. Memory read and write bus operations can be effected within a duration of 167ns without any problem if a high speed memory is used. However, the I/O unit cannot match the pace of the memory in this instance and requires almost the same operation time as the I/O bus operation for the standard information processing unit described above in relation to Figure 15.

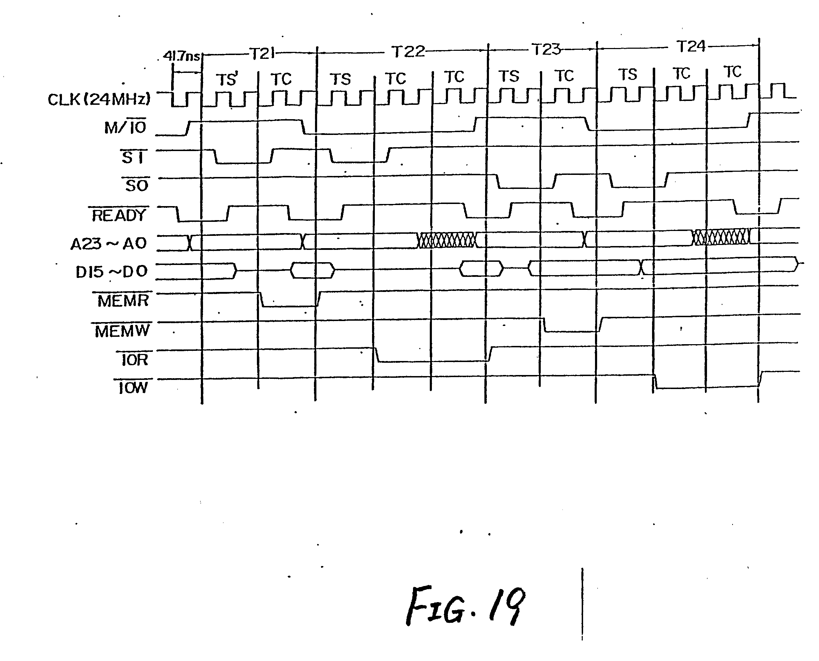

To meet this problem in the I/O read and write bus operations, a ready signal is used to create a wait step for extending the respective operation times, and a ready control circuit 16 is provided for this purpose. No wait step is put in the memory bus operations. A command de-code circuit 12, comparable with the command de-code circuit 2 in Figure 15 is also connected to the ready control circuit 16 and functions to produce extended pulse signals $\overline{IOR}$ and $\overline{IOW}$ to which a wait has been added. Figure 19 is a timing chart showing the timing of the signals generated in the information processing unit of Figure 18. As in the case of Figure 17, there are four bus operations based on clock cycles TS and TC. Since the clock frequency is 24 MHz, the cycle time of each clock cycle is 83ns.

Because no wait step is inserted in the memory read bus operation T21, and the memory write bus operation T23, each of these bus operations has a duration of 167ns. However, a wait step is inserted in the I/O read bus operation, T22, and the I/O write bus operation, T24, by the application of the ready signal and these operations last for three clock cycles, TS, TC and TC. Thus, the bus operation time is 250ns or the same as the duration of T32 and T34 in Figure 17. The pulse signals, $\overline{IOR}$ and $\overline{IOW}$, generated during the bus operations T22 and T24 are active during the TC clock cycle and therefore will be active during two clock cycles, and so have a pulse length of 167ns.

As described above, in a conventional method of controlling the operating speed of an information processing unit, a ready signal is applied to the CPU in order to generate a wait step in the CPU and thereby extend certain bus operations for regulating the I/O operation speed.

The inadequacy of this method has, however, become apparent.

Recent personal computers are being standardised. In particular, the use of connections called "option slots" for extension boards is becoming general. The option slot is a connection which easily permits users to connect an extension board to the computer when other functions are wanted than are provided within the computer by personal computer manufacturers. Various kinds of extension board are available, both from special third party extension board manufacturers and from personal computer manufacturers themselves. The importance of extension boards for personal computers is steadily increasing. Therefore, new products from personal computer manufacturers have to be designed so as to allow compatibility with many existing extension boards produced for old products.

Assume that the information processing unit in Figure 15 is an old type and that in Figure 18 is a new type. Assume also that I/O read and write bus operations are associated with an extension board, in an option slot, which has been designed for existing products, i.e. the extension board was designed so as to operate on the basis of signals having a timing according to the operations T32 and T34 in Figure 17. Although the durations of the bus operations T22 and T24 in Figure 19 are adjusted to correspond with the operations T32 and T34 by the insertion of a wait step, other aspects of these operations differ. Take T24 as an example. A pulse length of the signal $\overline{IOW}$ is different from that generated in the operation T34 (125ns for T34, but 167ns for T24). The operations also differ in the setting up time and the holding time for write data for the signal $\overline{IOW}$. This can cause some existing extension boards to be inoperative for new products.

In addition, adjustment of the bus operation time by putting in a wait step causes the following problems.

When the clock frequency is 24 MHz, for example, the bus operation time increases by steps of 83.3ns for each wait step so that the operation time is: 166.7ns with no wait step, 250ns with one wait step, 333.3ns with two wait steps, and so on. We may consider that the CPU provides access to a DRAM with an access time of 180ns. A DRAM with an access time of 180ns is commonly called a DRAM having a speed of 100ns (this indicates the random access time) and is, at present, the most normally supplied DRAM.

Since the duration of the I/O bus operation without a wait step is 166.7ns, which is shorter than the access time of the DRAM (180ns), access to the DRAM cannot be obtained without a wait step. When a wait step is added, the bus operation time becomes 250ns which is greater than the access time of the DRAM (180ns) and which is enough to provide access to the DRAM. However, with a bus operation time of 250ns, the efficiency of the CPU is reduced. In addition, the DRAM does not provide 100% performance with a bus operation time of 250ns.

Another problem occurs as follows when we pay attention to relation between the bus cycle time and processing ability for the CPU, etc.

Assume that the information processing unit has a guaranteed temperature range which is 0°C to 40°C, a guaranteed voltage range which is 4.75 V to 5.25 V and operating frequencies of 9 MHz at 40°C and 4.75 V, 10 MHz at 25°C and 5 V, and 11 MHz at 0°C and 5.25 V. The frequency of the clock pulses CLK is fixed and is set at 9 MHz in this unit. Under usual circumstances, the other conditions are mostly 25°C and 5 V. In such a case, the unit operates at 9 MHz, though it can properly work at 10 MHz, and therefore does not satisfy its full performance. On the other hand, if the frequency of the clock pulses CLK is set at 10 MHz, the unit cannot operate normally at 40°C and 4.75 V.

This invention aims to solve the problems mentioned above by providing a method of controlling the operating speed of an information processing unit by adjusting the bus operation time arbitrarily so as to permit the unit to have an optimum performance.

In accordance with the present invention there is provided a method of controlling the operating speed of an information processing unit including a central processing unit, comprising generating clock pulses for supply to a clock input terminal of the central processing unit for controlling the timing of the central processing unit, and characterised by altering the frequency of the clock pulses for selectively varying the timing.

For example, during a bus operation for a device which operates at high speed, such as a memory, the frequency of the clock pulses may be increased and, during a bus operation for a device which operates at low speed, such as an I/O unit, the frequency of the clock pulses may be reduced. In addition, the operating time of a read bus operation for a memory and a write bus operation for the same memory may be selected differently by altering the frequency of the clock pulses.

The timing of the central processing unit may also be controlled in dependence on the addresses to be accessed by the central processing unit by altering the frequency of the clock pulses.

Consequently, an advantage of the invention is that whereas for a high speed device, such as a memory, the bus operation time may be reduced by increasing the clock frequency to speed processing within the CPU, for an I/O read and write bus operation etc., which requires compatibility in timing with an existing product such as an extension board in an option slot, the timing of the bus operation and the associated signals may all be adjusted appropriately.

Furthermore, the invention permits adjustment of the duration of a bus operation to make this close to the access time of a memory to be used whenever possible so that the efficiency of the memory can be maximised, and the performance of the CPU can be enhanced.

The frequency of the clock pulses, and hence the timing of the CPU, may also be altered in dependence upon ambient temperature or line voltage.

Another advantage of the invention, therefore, is that the operating time of the information processing unit may be controlled to ensure an optimum processing speed in relation to ambient temperature and voltage.

In a described embodiment of the invention, the frequency of the clock pulses is altered by extending the period of a selected number of the clock pulses in a respective bus operation. This selected number may be set by programming. In addition, in this embodiment, a wait step may be created in the central processing unit by extending the overall number of the clock pulses in the respective bus operation, and the wait step may be finely adjusted by extending the period of the selected number of the clock pulses.

The invention is described further, by way of example, with reference to the accompanying drawings, in which:-

Figure 1 is a circuit diagram of an information processing unit embodying the present invention;

Figure 2 is a timing chart showing the timing of the signals generated in the information processing unit of Figure 1;

Figure 3 is a circuit diagram of another information processing unit;

Figure 4 is a timing chart showing the timing of the signals generated in the information processing unit of Figure 3;

Figure 5 is a circuit diagram of a further information processing unit;

Figure 6 is a circuit diagram showing details of the clock pulse generator of the information processing unit of Figure 5;

Figure 7 is a timing chart showing the timing of the signals generated in the information processing unit of Figure 5;

Figure 8 is a timing chart showing the timing of the signals generated in a CPU of Figure 5;

Figure 9 is a table providing a comparison of the present invention and conventional techniques;

Figure 10 is a circuit diagram showing a modification of the clock pulse generator of Figure 6;

Figure 11 is a timing chart showing the timing of the signals generated in the clock pulse generator of Figure 10;

Figure 12 is a circuit diagram of a further information processing unit;

Figure 13 is a timing chart showing the timing of the signals generated in the information processing unit of Figure 12;

Figure 14A is a circuit diagram of a further information processing unit;

Figure 14B, (a) and (b) are graphs showing access time - line voltage characteristics and access time -ambient temperature characteristics;

Figure 15 is a circuit diagram of a conventional information processing unit;

Figure 16 is a table showing the relationship between signals generated in the information processing unit of Figure 15 and a bus cycle of a CPU of the information processing unit;

Figure 17 is a timing chart showing the timing of the signals generated in the information processing unit of Figure 15;

Figure 18 is a circuit diagram of another conventional information processing unit; and

Figure 19 is a timing chart showing the timing of the signals generated in the information processing unit of Figure 18.

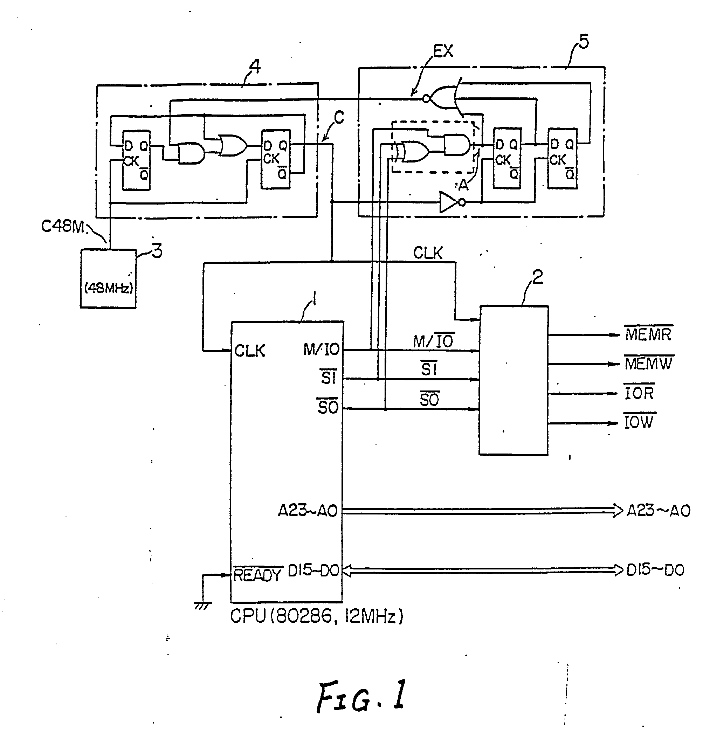

Figure 1 is a block diagram of an information processing unit employing the method according to the invention. A CPU 1 of the 80286 type having an operating frequency of 12 MHz has a ready terminal READY fixed at the level L. A command decode circuit 2 is connected to terminals M/ $\overline{IO}$, $\overline{ST}$, $\overline{SO}$ of the CPU 1. An oscillator 3 generates an oscillating signal with a frequency of for example 48 MHz. A frequency divider circuit 4 divides the frequency of the oscillating signal by two when a control signal EX (described below) goes to the level L and by three when the control signal EX goes to the level H. The output from the oscillator 3 thus divided in the frequency divider circuit 4 is provided at the output C of the circuit 4 for supply as clock pulses CLK to the CPU 1. Accordingly, when the control signal EX is at the level L, the output frequency, 48 MHz, of the oscillator 3 is divided into two, and the clock pulses supplied to the CPU 1 have a frequency of 24 MHz. When the control signal EX is at the level H, the output frequency of the oscillator 3 is divided into three, and the clock pulses CLK supplied to the CPU 1 have a frequency of 16 MHz.

A bus operation identification circuit 5 recognises a bus operation to be extended and produces the control signal signal EX accordingly. In this example, the control signal EX goes to the level L during a memory bus operation and to the level H during an I/O bus operation. During the memory bus operation, the control signal EX output by the bus operation identification circuit 5 is at the level L and the frequency divider circuit 4 functions as the divide by two frequency divider circuit to generate an output having a frequency of 24 MHz. During the I/O bus operation, the control signal EX produced by the bus operation identification circuit 5 is at the level H so that the frequency divider circuit 4 functions as the divide by three frequency divider circuit to generate an output having a frequency of 16 MHz.

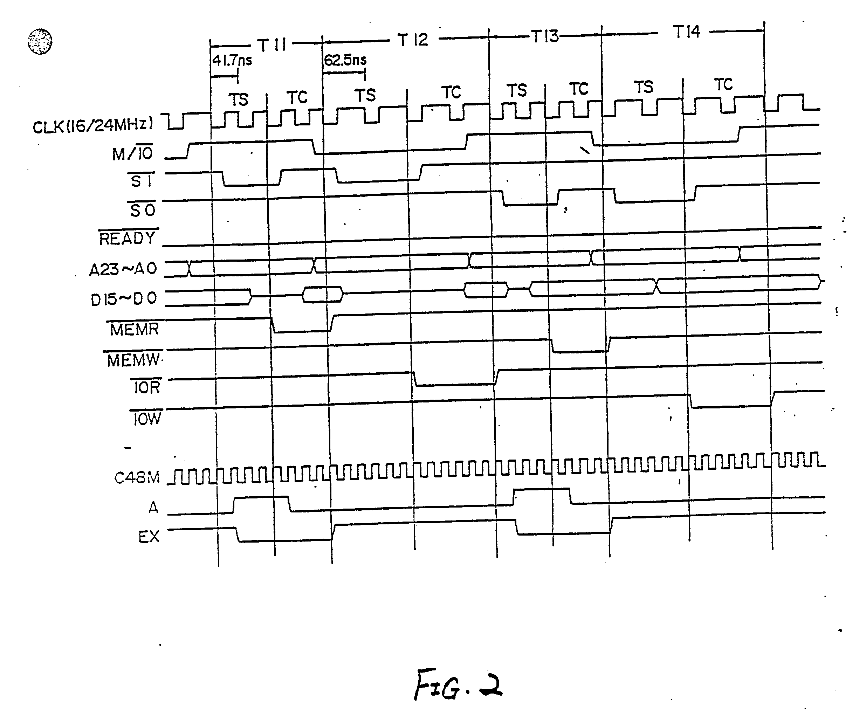

Signals M/ $\overline{IO}$, $\overline{ST}$ and $\overline{SO}$ which are transmitted from the corresponding terminals of the CPU 1 and which indicate the current state of the bus cycle, are de-coded in the bus operation identification circuit 5 to produce a signal A, which goes to the level H during a TS clock cycle, (which clock cycle is described in relation to the prior art) in response to a memory bus operation. This signal A is extended by two flip-flops and held stable during the respective bus operation in order to generate the control bus operation identification signal EX. The timing chart of Figure 2 shows the timing of the signal A in the bus operation identification circuit 5 and of the control signal EX.

The operation of the circuitry shown in Figure 1 will be explained below: in the information processing unit shown in Figure 1, the frequency of the clock pulses CLK is 24 MHz (the internal operating frequency of the CPU 1 is then 12 MHz) when the CPU 1 is running a memory bus operation and is 16 MHz (the internal operating frequency of the CPU 1 is then 8 MHz) when the CPU 1 is running an I/O bus operation so that the clock frequency can be dynamically changed. The timing chart shown in Figure 2 may be used to explain the bus operation timing when the CPU 1 of Figure 1 cycles through four bus operations.

During a memory read bus operation T11 and a memory write bus operation T13, the frequency of the clock pulses CLK is 24 MHz and the bus operation time is 167ns. Since the ready signal READY stays at the level L, no wait step is inserted. On the other hand, during an I/O read bus operation T12 and an I/O write bus operation T14, the frequency of the clock pulses CLK is 16 MHz. That is, the frequency is lower than that during the memory bus operations. However, the ready signal READY stays at the level L during the I/O bus operation also and so no wait step is put in. The duration of the bus operations T12, T14 is therefore 250ns. Consequently, there is no difference in the durations of the bus operations T22 and T24 shown in Figure 19 (obtained by known techniques) and the bus operations T12 and T14 as shown in Figure 2 (according to this invention). However, there is a definite difference in the timing of each signal during the respective bus operation, and the timing of the signals during the bus operations T12 and T14 as shown in Figure 2 is advantageously much the same as that for the signals during the bus operations T32 and T34 as shown in Figure 17 (the timing chart for a known information processing unit). This is accomplished by adjusting the frequency of the clock pulses CLK for the CPU 1 in Figure 1 during the I/O bus operation to that of the clock pulses CLK for the CPU 21 in Figure 15. Up to now, only the duration of the bus operations T22 and T24 as shown in Figure 19 could be adjusted to correspond with that of the bus operations T32 and T34 as shown in Figure 17. Therefore, a significant improvement has been made by the present invention, which permits the adjustment of each timing signal in the bus operation as well as the duration of the bus operation.

In the example of Figure 1, the frequency of the clock pulses CLK can be switched between 24 MHz and 16 MHz, but more than three alternative frequencies can also be employed. While the frequency in the memory bus operation is 24 MHz and that in the I/O bus operation is 16 MHz in this example, additional conditions can be attached depending on memory address and I/O address. For example, a frequency of 24 MHz can be set to provide access to a memory in a certain address location and a frequency of 16 MHz can be set to provide access to a memory in another address location. It is also possible to set frequencies for the clock pulses CLK for each bus operation by means of software. The same applies to the further examples to be mentioned below.

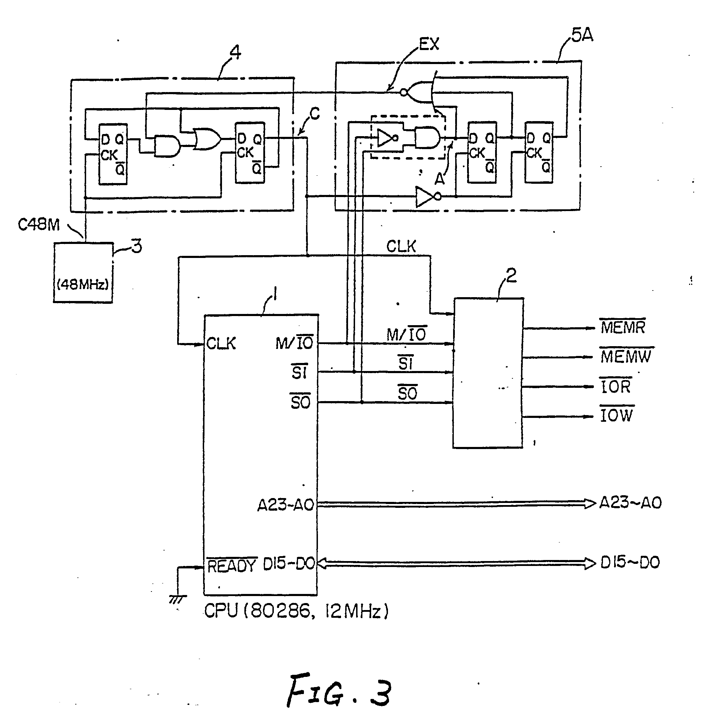

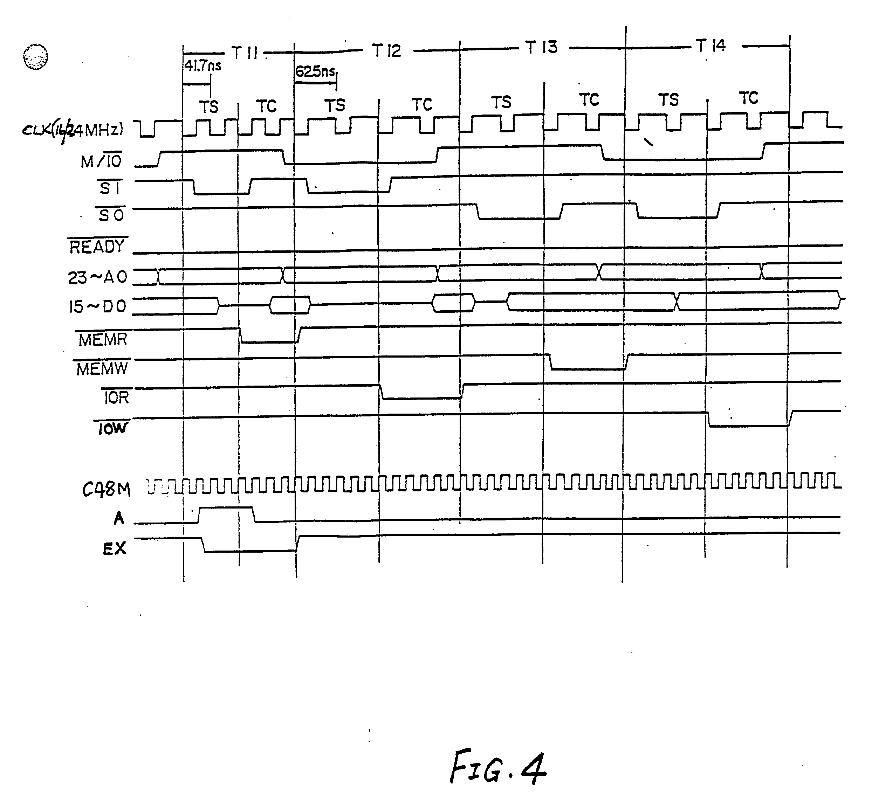

Turning now to Figure 3, this shows an information processing unit which is similar to the example shown in Figure 1 except in that the portion of the bus operation identification circuit 5A marked with broken lines is changed and comprises an inverter and an AND gate in place of the exclusive OR gate and the AND gate of the corresponding portion in Figure 1. In this example, a signal A goes to the level H only when the signals M/ $\overline{IO}$, $\overline{SI}$, $\overline{SO}$ are equal to (1, 0, 1). In other words, the signal A is at the level H only during the memory read operation, and hence the control signal EX is also at the level H only during this operation. Thus, as shown in the timing chart in Figure 4, the frequency of the clock pulses CLK is 24 MHz only during the memory read bus operation T11 and is 16 MHz during the other bus operations, namely the I/O read bus operation T12, the memory write bus operation T13 and the I/O write bus operation T14. In this way, different frequencies for the clock pulses CLK are set for each of the memory read operation and the memory write bus operation to obtain different access times.

In this example, a high frequency for the clock pulses CLK is set so that the memory read access time can be shorter than the memory write access time. This can be reversed at need.

In the first and second examples of the invention described above, different frequencies are set depending on the respective bus operation. For example, the frequency of the clock pulses CLK is decreased during the I/O bus operation or varies from the read bus operation to the write bus operation even if they are associated with the same memory. A further development can be as follows: namely, the frequency of the clock pulses CLK may be decreased to control operation time by checking for interrupts in an interrupt-acknowledge cycle (M/ $\overline{IO}$ = 0, $\overline{SI}$ = 0, $\overline{SO}$ = 0).

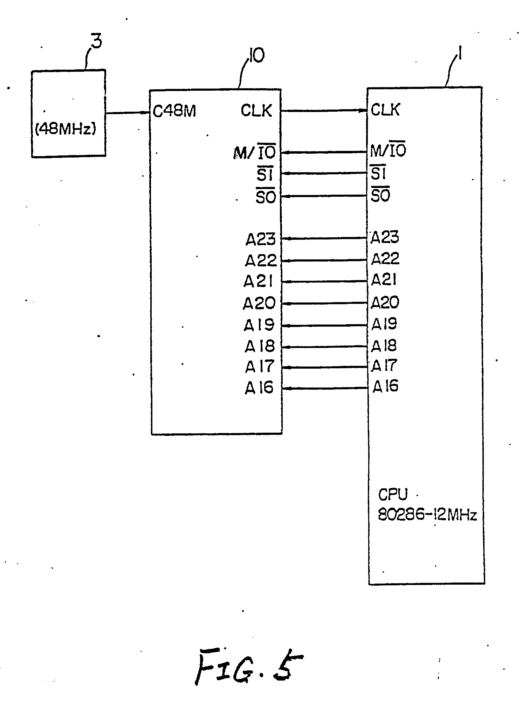

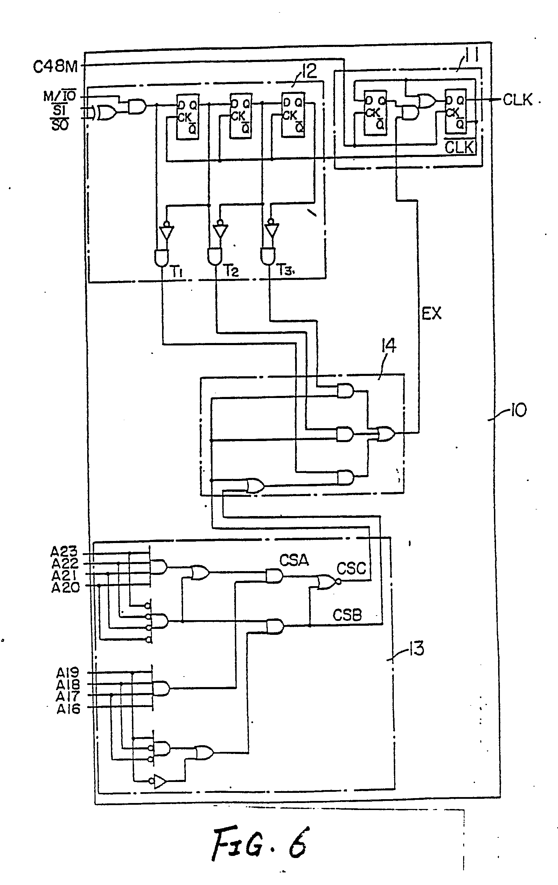

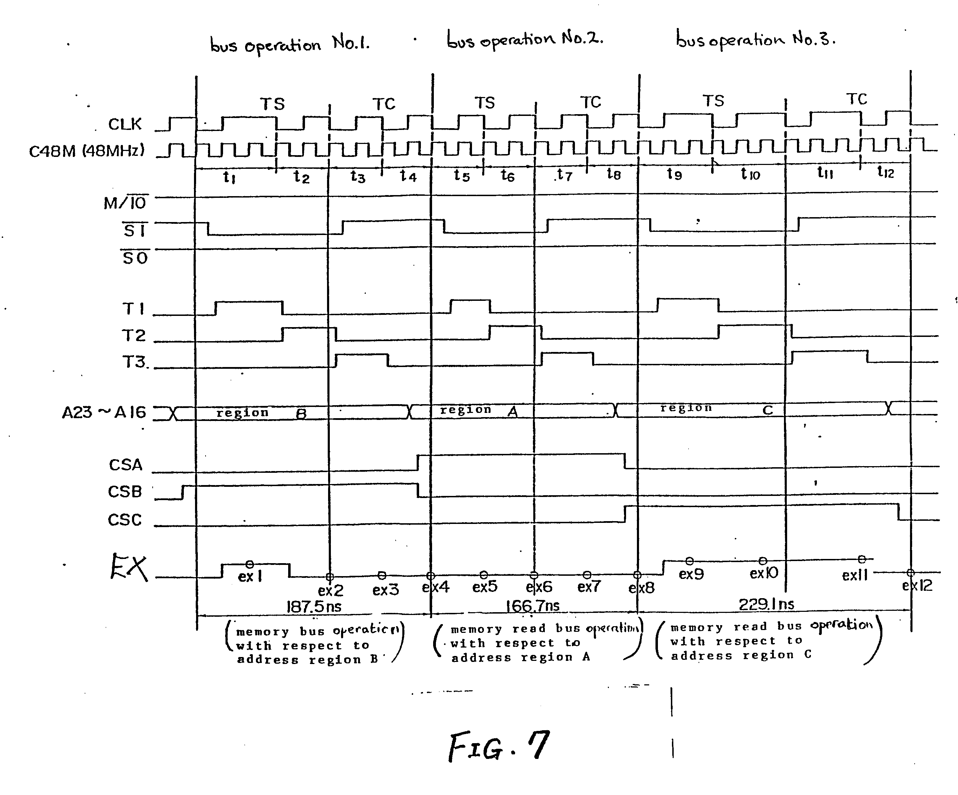

A further example of the invention will now be described with reference to Figure 5, which is a circuit diagram of another information processing unit, and Figure 6, which is a circuit diagram showing details of a clock pulse generator of such a unit. This unit comprises the same CPU 1 as is shown in Figure 1 and the same type of oscillator 3. A clock pulse generator 10 receives the oscillating signal (C48M) having the frequency 48 MHz issued from the oscillator 3 and divides the frequency to produce the clock pulses CLK for the CPU 1. The signals M/ $\overline{IO}$, $\overline{SI}$ and $\overline{SO}$ generated by the CPU 1 identify the bus operations of the CPU as before. The correspondence between the signals M/ $\overline{IO}$, $\overline{SI}$, $\overline{SO}$ and the bus operations are as shown in Figure 16. Signals A23 to A16 (and corresponding terminals) represent 8 bits of an address bus. The clock pulse generator 10 monitors the bus operation and the address location in the CPU 1 by watching the signals M/ $\overline{IO}$, $\overline{SI}$, $\overline{SO}$ and A23 to A16, and the division ratio of a frequency divider circuit within the clock pulse generator 10 is switched dynamically accordingly to produce waveforms as shown in Figure 7.

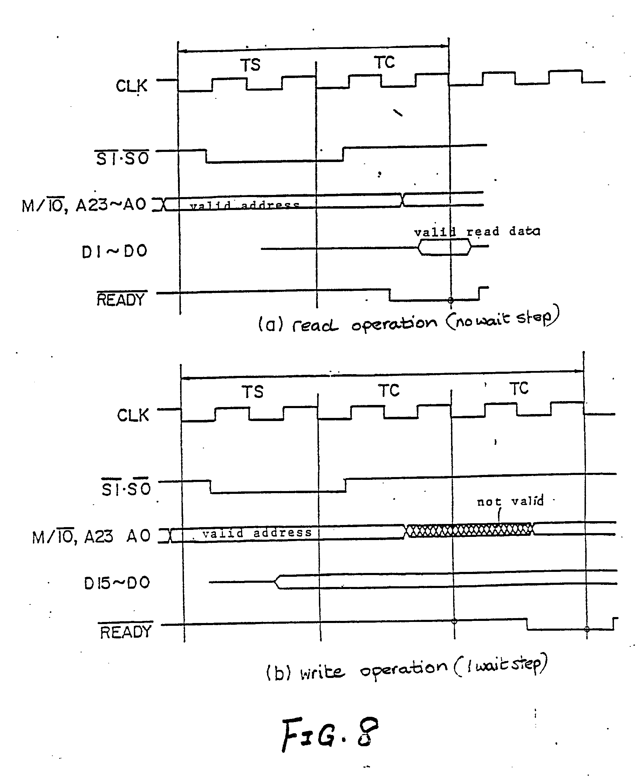

The general relationship between the signals in the CPU 1 when modified to receive a ready signal $\overline{READY}$ is briefly illustrated in Figure 8A, which shows a read operation without a wait step, and Figure 8 (b), which shows a write operation with a wait step. The basic bus operation of the CPU 1 (without a wait step) is composed of one clock cycle TS and one clock cycle TC. If the ready signal $\overline{READY}$ goes to the level L at the end of the clock cycle TC, the basic bus operation is completed without a wait step. If the ready signal $\overline{READY}$ goes to the level H at the end of the clock cycle TC, a further clock cycle TC is added and the bus operation is completed after the ready signal $\overline{READY}$ goes to the level L. Signals $\overline{SI}$ and $\overline{SO}$ are issued during the clock cycle TS. The signals M/ $\overline{IO}$ and A23 to A0 become active when the clock pulses CLK fall before the bus operation starts and continue to provide proper values up to the end of the first half of the first clock cycle TC. During the read operation, data is fetched in the CPU at the end of the bus operation and is held until the first clock pulse in the next operation falls.

In the clock pulse generator 10, as shown in Figure 6, a frequency divider circuit 11 produces clock pulses CLK by dividing the frequency, 48 MHz, of the oscillating signal C48M by two or by three. When the control signal EX, which is produced by a frequency divider control circuit 14 and which controls the division ratio, is at the level H, the frequency divider circuit 11 functions as a division by three frequency divider circuit to produce clock pulses CLK having a frequency of 16 MHz. When the control signal EX is at the level L, the frequency divider circuit 11 functions as a division by two frequency divider circuit to produce clock pulses CLK having a frequency of 24 MHz. A clock timing circuit 12 produces timing signals T1, T2 and T3 during each bus operation as shown in Figure 7, when a memory read or write bus operation is performed, and supplies such signals to the frequency divider control circuit 14. An address de-code circuit 13 de-codes memory addresses to provide output signals CSB, CSC for supply to the frequency divider control circuit 14.

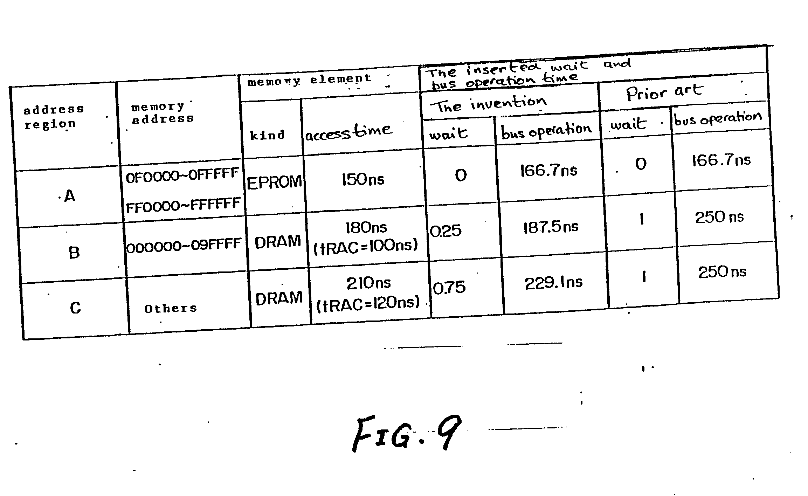

The example shown in Figure 5 provides memory address mapping as shown in Figure 9. Addresses 0F0000 to 0FFFFF and FF0000 to FFFFFF are associated with an EPROM with an access time of 150ns and these locations are temporarily called address location A. Addresses 000000 to 09FFFF are associated with a DRAM with an access time of 180ns and these locations are temporarily called address location B. Other locations than A and B are temporarily called location C. It is assumed that a DRAM with an access time of 210ns is used in the address location C. The timing chart in Figure 7 may be used to explain the operation of the clock pulse generator 10 in Figure 6 when the CPU 1 provides access to each address location employing memory address mapping as mentioned above. The first bus operation is a memory read bus operation for address location B. At this time, the address de-code circuit 13 supplies output signal CSB = 1 and CSC = 0. Timing signals T1, T2 and T3 are derived from the signals M/ $\overline{IO}$, $\overline{ST}$, $\overline{SO}$. Among them, only the signal T1 passes through the frequency divider control circuit 14. Thus, the control signal EX goes to the level H only in the first half of the clock cycle TS as shown in Figure 7. The frequency divider circuit 11 functions as a division by three frequency divider circuit when the control signal EX goes to the level H (which is judged at a timing point ex1 in Figure 7). The first half of the clock cycle TS (the period t1) consists of three clock pulses of the signal C48M. During the latter half of the clock cycle TS and the clock cycle TC, (periods t2, t3 and t4), the control signal EX goes to the level L (which is judged at the timing points ex1, ex3 and ex4) and the frequency divider circuit 11 functions as a division by two frequency divider circuit. Consequently, each period t2, t3 and t4 consists of two clock pulses of the signal C48M. That is, the bus operation No. 1 is composed of nine clock pulses of the signal C48M. In the prior art, a frequency divider circuit is employed which always operates as a division by two frequency divider circuit and a bus operation without a wait step based on a signal, such as the signal C48M, is composed of eight clock pulses. Thus, the bus operation No. 1 is equivalent to a prior bus operation having a 0.25 wait step.

The bus operation No. 2 is a memory read bus operation for address location A. At this time, the signals supplied by the address de-code circuit 13 are CSB = 0 and CSC = 0, and the control signal EX is at the level L throughout. The frequency divider circuit thus operates as a division by two frequency divider circuit. This means that the bus operation No. 2 has the same duration as the prior bus operation, i.e. 166.7ns without a wait step.

The bus operation No. 3 is a memory read bus operation for address location C. At this time, the signals supplied by the address de-code circuit 13 are CSB = 0 and CSC = 1. The control signal EX goes to the level H in response to the timing signals T1, T2 and T3, during which time the frequency divider circuit 11 operates as an division by three frequency divider circuit. Thus, during the periods t9, t10 and t11, the corresponding halves of the clock cycles TS and TC are composed of three clock pulses of the signal C48M. In the latter half of the clock cycle TC, the control signal EX goes to the level L and so this half of the clock cycle TC is composed of two pulses of the signal C48M. Since the bus operation No. 3 is composed of eleven clock pulses of the signal C48M in total, the bus operation time becomes 229.1ns, which corresponds to the duration of the prior bus operation with a 0.75 wait step.

The frequency divider circuit 11 judges its division ratio at the timing points ex1 to ex12 in Figure 7. Each bus operation, the number of wait steps and the bus operation time is summarised in Figure 9, which further provides a comparison with conventional methods. In conventional methods, a full wait step (of say 83.3ns duration) only is possible and therefore address locations B and C require one whole wait step, the bus operation time then being 250ns. The bus operation time without a wait step for location A remains unchanged. Assuming that access frequencies against address locations A, B and C of the CPU are 40%, 40% and 20% respectively, the mean bus operation times in the present example and in the prior art may be calculated as follows: according to the present example,

$0.4 \times 166.7 + 0.4 \times 187.5 + 0.2 \times 229.1 = 187.5$ns

(mean: 0.25 wait step) and according to the prior art,

0.4 x 166.7 + 0.4 x 250 + 0.2 x 250 = 216.7ns (mean: 0.6 wait step). Thus, if the same memory data is used, the present example ensures an improvement in performance of some 10% to 15%.

In the above example shown in Figure 5, a 0.25 wait step is employed but smaller wait steps are also possible. Figure 10 shows a clock pulse generator for an information processing unit, in which a smaller wait step, for example a 0.125 wait step, is obtained by increasing the frequency of the source oscillation.

In Figure 10, an oscillating signal C96M has a frequency of 96 MHz. Comparing the circuit in Figure 10 with that in Figure 6, there is no difference in the clock timing circuit 12, the address de-code circuit 13 and the frequency divider control circuit 14. However, the frequency divider circuit 11a illustrated in Figure 10 is arranged to divide the frequency of the oscillating signal C96M by four or by five instead of by two or by three as in the case of the frequency divider circuit 11 in Figure 6. The frequency divider circuit 11a operates as a divide by five frequency divider circuit when the division ratio control signal EX goes to the level H and as a divide by four frequency divider circuit when the control signal EX goes to the level L. Consequently, the frequency of the clock pulses CLK becomes 96 ÷ 5 = 19.2 MHz with the control signal EX at the level H and 96 ÷ 4 = 24 MHz with the control signal at the level L.

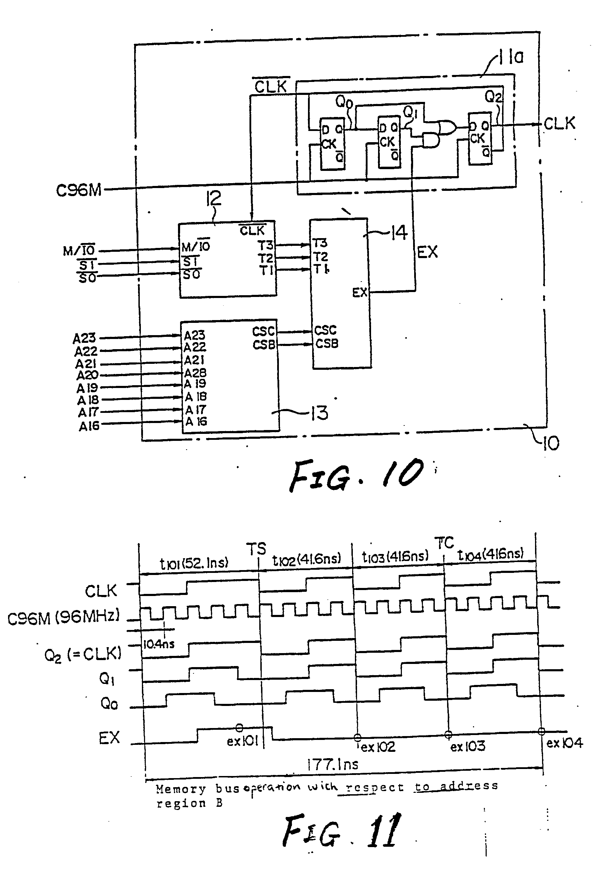

Figure 11 is a timing chart showing the timing of the signals in this instance when a memory read bus operation for the address location B is performed. The control signal EX goes to the level H for access to the address location B during the first half of the clock cycle TS (period t101) and goes to the level L during the other periods (t102, t103, t104). This is much the same as in the case of the bus operation No. 1 in Figure 7.

When the control signal EX goes to the level H, the frequency divider circuit 11a functions as a divide by five frequency divider circuit and outputs ($Q_0$, $Q_1$, $Q_2$) of respective flip-flops forming the frequency divider circuit 11a change from (0, 0, 0) to (1, 0, 0) to (1, 1, 1) to (0, 1, 1) to (0, 0, 1). Thus, the period t101 is 52.1ns.

When the control signal EX is at the level L, the outputs ($Q_0$, $Q_1$, $Q_2$) of the flip-flops change from 0, 0, 0) to (1, 0, 0) to (1, 1, 1) to (0, 1, 1) and the frequency divider circuit 11a operates as a divide by four frequency divider circuit. That is, the periods t102, t103 and t104 are 41.6ns respectively.

As a result, the total bus operation time is 177.1ns, which is equivalent to the prior bus operation time, 166.7ns with a 0.125 wait step. The frequency divider circuit 11a judges its division ratio by the level of the control signal EX at the timing points ex101, ex102, ex103 and ex104.

From the above, it can be seen that a wait step in very small units by comparison with those employed in conventional methods can be inserted by increasing the number of clock pulses CLK for the CPU. This ensures very fine adjustment of the bus operation time in the CPU. Therefore, the CPU bus operation time can be set to suit the memory access time to make the best use of memory performance with a significantly improved processing speed.

The arrangements described with reference to Figures 5 to 10 relate to examples of the use of the invention in the memory bus operation. However, the invention may similarly be applied to an I/O bus operation requiring a high speed.

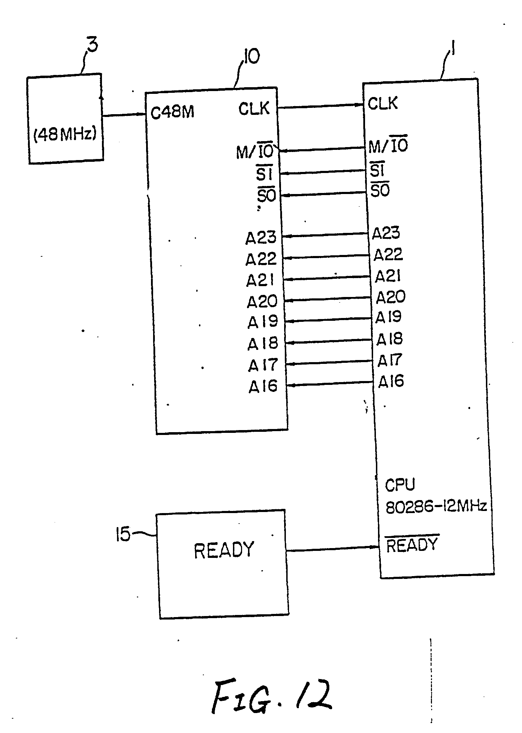

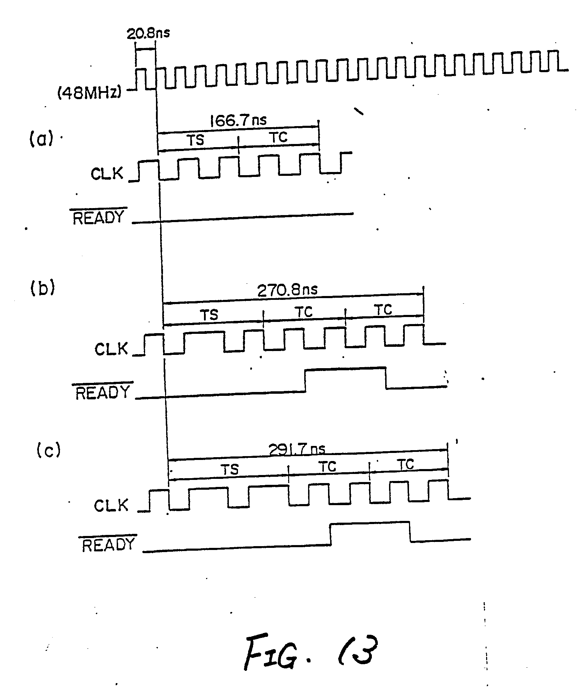

The following example combines the existing method of inserting a full wait step with the invention so that it becomes possible to achieve 1.25, 1.5 and 1.75 wait steps. Figure 12 is a circuit diagram of an information processing unit employing this example. The circuit shown in Figure 12 is similar to that of Figure 5 except in that a ready control circuit 15 is connected to a ready terminal READY of the CPU 1. Figure 12 is a timing chart showing the operation of this example.

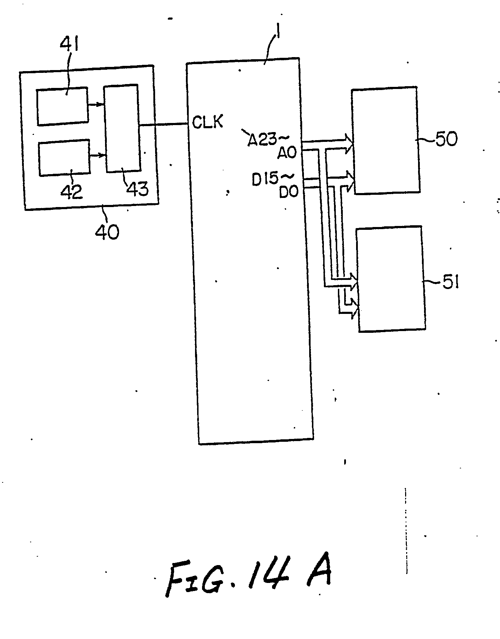

Portion (a) of the timing chart of Figure 13 shows the ready signal $\overline{\text{READY}}$ issued from the ready control circuit 15 at the level L. That is, the control signal EX is at the level L and the bus operation time is 166.7ns. In portion (b) of Figure 13, the control signal EX goes to the level H during the first half of the clock cycle TS and one of the clock pulses CLK is extended by one pulse of the oscillating signal C48M (a 0.25 wait step). In addition, the ready signal $\overline{\text{READY}}$ from the ready control circuit 15 goes to the level H in the clock cycle TC, and so a further clock cycle is produced, extending the bus operation time by one wait step. The duration of the bus operation is therefore 270.8ns in total, or is extended by 1.25 wait steps. In portion (c) of Figure 13, the control signal EX goes to the level H during the clock cycle TS and two of the clock pulses CLK are extended (a 0.5 wait step). Further, the ready signal $\overline{\text{READY}}$ and the ready control circuit 15 goes to the level H during the clock cycle TC to produce a further clock cycle TC and extend the bus operation time by one wait step. The duration of the bus operation therefore becomes 291.7ns in total, which corresponds to an extension of 1.5 wait steps. Fine adjustment of the bus operation time by more than one wait step can thus be made by controlling the ready signal $\overline{\text{READY}}$ to the CPU 1 and by partially changing the frequency of the clock pulses CLK.

By combining the various arrangements described above, an inter-leave memory access method, a high speed paging memory acces method, a static column memory access method, etc. and further speeding up may be obtained. In the above methods, no wait step is inserted when a hit takes place, but one or two wait steps are put in when there is no hit. Therefore, if no hit takes place, using the above methods to put in a wait step in smaller units, (such as 0.25, 0.5, 0.75, 1.25 or 1.5 wait steps) speeds up existing high speed memory access methods (inter-leave, high speed paging, static column memory access methods).

Also, quick or slow access regions can be set by arbitrarily setting addresses to be identified in the address identification circuit 13. During a certain one or more bus operations, a wait step can be changed by altering the frequency of the clock pulses CLK to a fixed frequency for all the address locations.

In the above examples, the frequency of the clock pulses CLK is changed by means of a frequency divider circuit. However, several types of oscillator can be used to change the frequency instead.

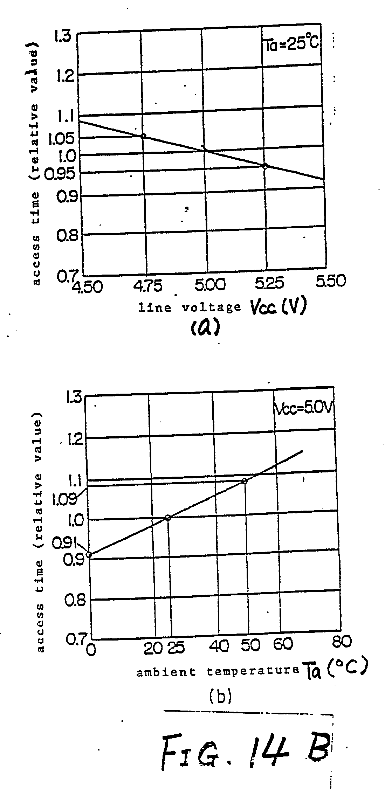

In the following example, described with reference to Figure 14A, the frequency of the clock pulses CLK to be applied to the CPU 1 is controlled depending on line voltage and ambient temperature. A clock controlling circuit 40 comprises a voltage detecting circuit 41, a temperature detecting circuit 42 and a variable oscillator circuit 43. A memory controlling circuit 50 and an I/O device controlling circuit 51 are also provided. The voltage detecting circuit 41 detects the line voltage and the temperature detecting circuit 42 detects the ambient temperature. Data obtained by these two circuits 41 and 42 is supplied to the variable oscillator 43. The variable oscillator 43 changes the frequency of its output signal according to the data and provides clock pulses CLK at its output for supply to the terminal CLK of the CPU 1.

The CPU 1, memory controlling circuit 50 and I/O device controlling circuit 51 are formed of LSI and their operating frequency strongly depends on voltage and ambient temperature and changes by some 20% within a range of 0° C to 40° C and 4.75 V to 5.25 V. The frequency of the clock pulses CLK may be changed by about 20% accordingly.

Figure 14B shows examples of the access time-line voltage characteristics and access time-ambient temperature characteristics. In Figure 14B (a), assuming that a line voltage of 5 V is standard, access time will be 0.95 at 5.25 V, or faster by 5%, and 1.05 at 4.75 V, or slower by 5%. In Figure 14B (b), assuming that an ambient temperature of 25° C is standard, access time will be 1.09 at 50° C, or slower by 9%, and 0.91 at 0° C, or faster by 9%.

In this example, by controlling the frequency of the clock pulses CLK, the rate at which information is processed in a processing unit can be increased by some 10% in the usual working environment (25° C, 5 V). Up to now, the frequency of clock pulses CLK has been fixed at 9 MHz so that operation could be guaranteed at 40° C and 4.75 V but, in this example, the optimum frequency for the clock pulses is determined depending on each operating environment. For example, it will be 10 MHz at 25° C and 5 V and this increases speed by 10% compared with 9 MHz in the existing method.

Accordingly, by means of the invention, the frequency of clock pulses CLK for controlling the timing of a CPU can be dynamically changed according to the bus operation or addess. Therefore, during bus operations associated with an extension board connected to an option slot, the frequency of the clock pulses CLK can be reduced to correspond with the frequency of the clock pulses employed by an existing product. Thus, there is no difference in the timing of the signals supplied to the option slot in the case of both new and old products, and extension boards produced for existing products can also operate in association with new products.

Consequently, this invention permits new products (personal computers) to be so designed as to allow high compatibility with existing goods (e.g. extension boards).

The present method also enables very small wait steps to be inserted into the bus cycle as compared with conventional techniques, by partially extending the frequency of the clock pulses CLK, thereby ensuring very fine adjustment of the bus cycle. As a result, the bus cycle can be set to memory access time and memory performance can be used to the utmost limit with greatly reduced CPU processing time.

Besides, because the processing ability can be set depending on operating conditions by controlling the frequency of the clock pulses CLK, e.g. as a function of temperature or voltage, the rate at which data in the information processing unit is processed is increased.

## Claims

1. A method of controlling the operating speed of an information processing unit including a central processing unit, comprising generating clock pulses (CLK) for supply to a clock input terminal of the central processing unit (1) for controlling the timing of the central processing unit, and characterised by altering the frequency of the clock pulses for selectively varying the timing.

2. A method according to claim 1 characterised by altering the frequency of the clock pulses in dependence upon the current operation within a bus cycle of the central processing unit.

3. A method according to claim 2 characterised in that the duration of read and write bus operations in a memory are controlled by altering the frequency of the clock pulses.

4. A method according to any preceding claim characterised by altering the frequency of the clock pulses in dependence upon respective addresses to be accessed by the central processing unit.

5. A method according to any preceding claim characterised by altering the frequency of the clock pulses in dependence upon the ambient temperature.

6. A method according to any preceding claim characterised by altering the frequency of the clock pulses in dependence upon line voltage.

7. A method according to claim 2 or 3 characterised by altering the frequency of the clock pulses during a respective bus operation by extending the period of a selected number of the clock pulses occurring during the respective bus operation.

8. A method according to claim 7 characterised in that the selected number is pre-programmed.

9. A method according to claim 7 or 8 further characterised by extending the overall number of clock pulses in the respective bus operation so as to generate a wait step in the central processing unit.

10. An information processing unit having a central processing unit (1), and means (3, 4, 5; 3, 4, 5A; 3, 10) for generating clock pulses (CLK) for supply to a clock input terminal of the central processing unit for controlling the timing of the central processing unit, characterised in that the means for generating the clock pulses comprise means (3) for generating an oscillating signal, and means (4, 5; 4, 5A; 10) for variably dividing the frequency of the oscillating signal so as to generate clock pulses having a selectively variable frequency.

FIG. 1

FIG. 2

FIG. 3

FIG. 4

FIG. 5

FIG. 6

FIG. 7

(a) read operation (no wait step)

(b) write operation (1 wait step)

FIG. 8

EP 0 348 045 A2

| address region | memory address | memory element | | The inserted wait and bus operation time | | | |
| | | | | The invention | | Prior art | |
| | | kind | access time | wait | bus operation | wait | bus operation |
| A | 0F0000~0FFFFF FF0000~FFFFFF | EPROM | 150ns | 0 | 166.7ns | 0 | 166.7ns |
| B | 000000~09FFFF | DRAM | 180ns (tRAC=100ns) | 0.25 | 187.5ns | 1 | 250ns |
| C | Others | DRAM | 210ns (tRAC=120ns) | 0.75 | 229.1ns | 1 | 250ns |

FIG. 9

FIG. 10

Memory bus operation with respect to address region B

FIG. 11

FIG. 12

FIG. 13

$F_I G. 14 A$

(a)

(b)

FIG. 14 B

FIG. 15

| M/$\overline{\text{IO}}$ | $\overline{\text{SI}}$ | $\overline{\text{SO}}$ | bus cycle | corresponding signals |
|---|---|---|---|---|
| 0 | 0 | 0 | interruption acknowledge | |
| 0 | 0 | 1 | I/O$_{read}$ | $\overline{\text{IOR}}$ |
| 0 | 1 | 0 | I/O$_{write}$ | $\overline{\text{IOW}}$ |
| 0 | 1 | 1 | nothing | |
| 1 | 0 | 0 | hold or shut down | |
| 1 | 0 | 1 | memory read | $\overline{\text{MEMR}}$ |
| 1 | 1 | 0 | memory write | $\overline{\text{MEMW}}$ |
| 1 | 1 | 1 | nothing | |

$FIG. 16$

FiG. 17

FIG. 18

FiG. 19